# EUROPEAN PATENT SPECIFICATION

(11) **EP 0 850 720 B1**
(45) Date of publication and mention of the grant of the patent: **18.09.2002**
(21) Application number: 96830651.4
(22) Date of filing: 24.12.1996
(51) Int. Cl.: B23P 19/00, B23P 21/00, G05B 19/418, B23Q 7/10

(54) **Manufacturing process for an article**
Herstellungsverfahren für einen Gegenstand
Procédé de fabrication d'un article

(43) Date of publication of application: 01.07.1998
(73) Proprietor: Datasensor S.p.A., 40050 Monte San Pietro (BO) (IT)
(72) Inventor: Fei, Enzo, 40017 S. Giovanni in Persiceto (BO) (IT); Guermandi, Floriano, 41018 San Cesario sul Panaro (MO) (IT)
(74) Representative: Checcacci, Giorgio

(56) References cited:
- EP-A- 0 606 515
- US-A- 4 669 047
- US-A- 4 787 141
- PATENT ABSTRACTS OF JAPAN vol. 10, no. 304 (M-526), 16 October 1986 & JP 61 117033 A (HITACHI), 4 June 1986,
- PATENT ABSTRACTS OF JAPAN vol. 12, no. 257 (M-719), 20 July 1988 & JP 63 039746 A (TOYOTA), 20 February 1988,
- PATENT ABSTRACTS OF JAPAN vol. 96, no. 11, 29 November 1996 & JP 08 169511 A (FUJI), 2 July 1996,
- IBM TECHNICAL DISLOSURE BULLETIN, vol. 31, no. 7, December 1988, ARMONK,NY,USA, pages 78-79, XP000035724 "Standardized design for automated work cell"
- MANUFACTURING REVIEW, vol. 4, no. 1, March 1991, NY,USA, pages 44-52, XP000204977 Y. SEO ET AL: "Configuration and operation of a pull-type manufacturing system"

## Description

The present invention relates to a process for the production of a product starting from a plurality of elements. By the term elements is meant here either parts designed to be assembled in the product or consumable materials used in the production of the product.

Processes in which the product is built in successive work stations in each of which a human or mechanical operator provides for one or more operations by using a certain number of types of different elements and assembling in this manner a semifinished product which is transferred to the following station until the product is completed are known and widely used. During production, there is consumption of elements in the station making necessary periodical resupply.

The overall efficiency of production of the product depends among other things on how each work station is supplied with the elements to be used. Specifically it is necessary that the elements to be used are never lacking (or better, are always present in at least a predetermined quantity termed 'minimum stock') so as not to cause interruptions in production but it is preferable that there not be too many. Indeed, each element stopped in a work station costs both as locked up capital equal in value to the element concerned and as the requirement to provide space to store it; naturally, depending on the value and space occupied of the individual elements, one or the other of these costs could predominate.

The ideal condition for greatest efficiency of the individual work station would be that in which the minimum stock is zero elements and an individual element is supplied immediately to the station as soon as the preceding one has been used. However, such a process is not always acceptable because it creates a serious risk of production shutdown for a very slight delay in elements resupply.

In practice therefore a minimum stock above zero is used. Resupply takes place in lots (reorder lots) containing a predetermined number of elements, and the time (resupply time) elapsing between the moment a work station requires resupply (reorder point) and the moment the resupply takes place is more than zero. Determination of minimum stock, reorder lot, reorder point and resupply time is made case by case depending on the type of production and the elements to be used so as to optimize overall management.

US-A-4,669,047 discloses a supply system of the so-called just-in-time type. Parts are automatically supplied to the working stations in containers according to a time schedule that is predetermined for delivering selected containers to selected stations before the quantity of parts at any stations is depleted below a predetermined minimum.

A known production process which allows good production efficiency is the one designated by the Japanese term 'kanban'. In accordance with this process, the lots of elements in the work station are organized in a queue: the work station operator uses the lots starting from one end of the queue while resupply takes place at the opposite end. The reorder point is signaled visually by a moving signal placed at the beginning of a lot: reaching this 'signaled' lot means that the reorder point has been reached. After reordering, i.e. after the resupply order, the moving signal is moved forward in the queue by exactly one reorder lot. This system makes visually clear the remoteness, nearness or reaching of the reorder point. Experience has shown the effectiveness of this process in increasing production efficiency. However, management of the moving signals lends itself to errors by the work station operator (wrong repositioning after a reorder) while performing the reorders, usually done on purposeful reorder forms, is laborious and subject to errors.

The problem at the base of the present invention is to conceive a process permitting further increase in production efficiency while reducing the possibility of errors and allowing if necessary even automatic handling of the reorders and resupplies to the individual stations.

Accordingly, the present invention concerns a process for the production of a product starting from a plurality of elements and comprising the steps of:
- use of at least one type of element in a work station with assembly of a semifinished product,
- transfer of the semifinished product to a following work station,
- repetition of the above operations in successive work stations until completion of the product,
characterized in that it includes in at least one of the work stations and for each element type which must be used in the work station the following steps:
- supply of the elements to the work station in identical containers always containing the same number of elements,
- provision of a single container in a work position of the work station and at least one other container in a service position of the work station beside the work position,
- use of the elements contained in the container placed in the work position until emptying thereof,
- making of a visual resupply order by moving of the empty container to an outlet area of the service position,
- moving of a full container into the work position, taking it from an input area of the service position,
- visual detection of the resupply order, and
- consequent execution of the resupply order by removal of the empty container from the outlet area of the service position and deposit within a predetermined resupply time of a corresponding full container in the inlet area of the same service position,
in which the number of containers in the service position, the number of elements in each container and the resupply time are predetermined on the basis of elements consumption in the work station so that in the work station, between the work position and the service position, there is always present a preset minimum stock of elements.

By this process the reorder point is signaled by the empty elements container placed in a predetermined area. It is accordingly not necessary to use any other signal. It is noted also that thanks to the present invention the work position must receive only one container for each of the elements used in the position, and not all the stock, with a clear advantage during the production operations. The containers beyond the first are held in the service position, in the input area if full or in the outlet area if empty.

It is noted in any case that the term 'container' as used in this text is to be understood in a broad sense either as an individual container which by itself contains all the reorder lot, or as a predetermined group of a certain number of containers which together contain the reorder lot. Indeed, it may sometimes be preferable to share the reorder lot between several containers, e.g. if it is very cumbersome. It is also noted that the above explanation, and in particular the constancy of the number of elements contained in a container of a certain type of elements refers to a single, specific process. If the production parameters are changed, different processing is assumed and the number of elements of each type can if necessary change in accordance with the changed requirements.

Preferably the process also includes the steps of:
- marking of each container with a container tag bearing information on the type and if necessary the number of elements contained in the container when full. This marking allows associating complete information with each container. If the container is full the information will be for its contents. If the container is empty the information will be either for how it is to be filled or especially for what is to be supplied to the work station from which it arrives. In other words, each marked empty container bears with it the complete contents of a resupply order.

The container tag can be in human readable form or machine readable form or both. A machine readable form permits information acquisition automation while human readability is appropriate where there are provided even partially manual controls and operations.

Preferably the process also includes the steps of:
- marking each work station with a station tag bearing machine readable station identifying information. This marking allows reliable identification of each work station in machine understandable form and thus permits automation of the operations connected with reordering.

In particular and preferably the process can include the steps of:
- reading the container and station tags for each empty container in the outlet area of a service position,
- sending the data read to a control center,
- processing the data in the control center with execution of a resupply order for replacement of the empty containers with full containers,
- reading of the container and station tags upon each replacement of an empty container with a full one in a service position,
- sending the data read to the control center, and
- processing the data in the control center so as to verify order execution.

In this manner there is obtained nearly completely automated handling of the operations connected with the reorder with reduction of any possibility of error.

Preferably the input areas are provided in the same position in all service positions and the outlet areas are provided in the same position in all service positions. This permits keeping a more orderly situation in the service positions and especially clearer indication of the presence of an empty container in the outlet area.

Preferably every service position has an upper shelf and a lower shelf with the upper shelf being the outlet area and the lower shelf being the input area. The higher positioning of the outlet area maximizes visibility of the empty containers present in these areas.

Further purposes and advantages of a process in accordance with the present invention are clarified in the detailed description of an embodiment thereof given below with reference to the annexed drawings wherein:

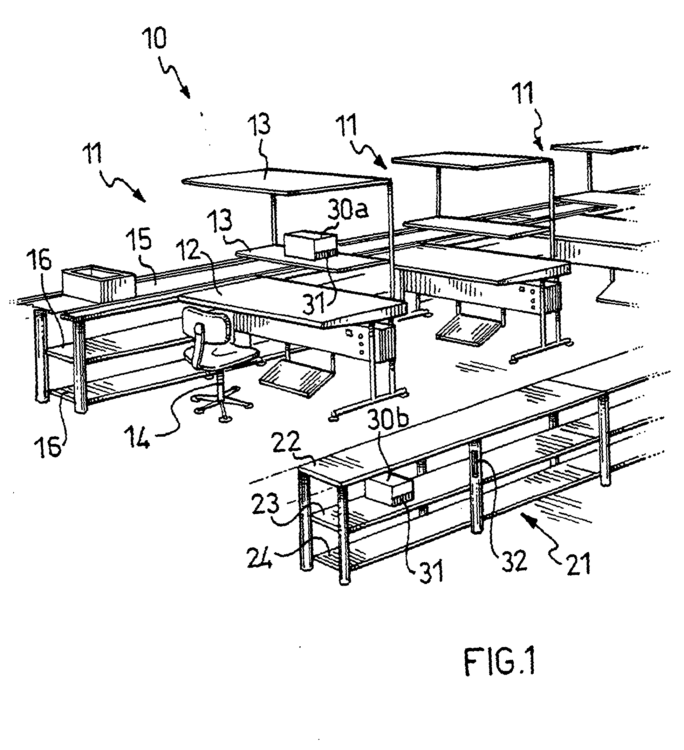

FIGS 1, 2 and 3 are schematic perspective views of a production line with some work positions and service positions under different working conditions.

With reference to the figures reference number 10 indicates as a whole a work station in a production line which includes a plurality of work stations. Each work station comprises a work position 11 which can have even very different forms depending on the type of production implemented on the line 10 and provides for the presence of a human or mechanical operator (not shown in the FIGS). In the FIGS there is shown by way of example a typical manual assembly production line in which each work position 11 comprises a work bench 12, one or more auxiliary support shelves 13 and a seat 14 for the human operator. Beside the work positions 11 is located a conveyor 15 for moving the semifinished products from one work position 11 to the following one. In the conveyor structure 15 there can be provided additional auxiliary support shelves 16.

In each work station 10, with the work position 11 there is associated a service position 21 located beside the work position 11 on the side opposite that of the conveyor 15. Each service position 21 comprises an outlet area 22 made up of at least one first upper shelf, also indicated by 22, and an input area 23 made up of at least one second shelf also indicated by 23. The service position 21 can if necessary provide other auxiliary support shelves 24. In the example illustrated the subsequent service positions 21 are structurally connected to each other and the shelves 22, 23 and 24 of the following service positions follow one after the other.

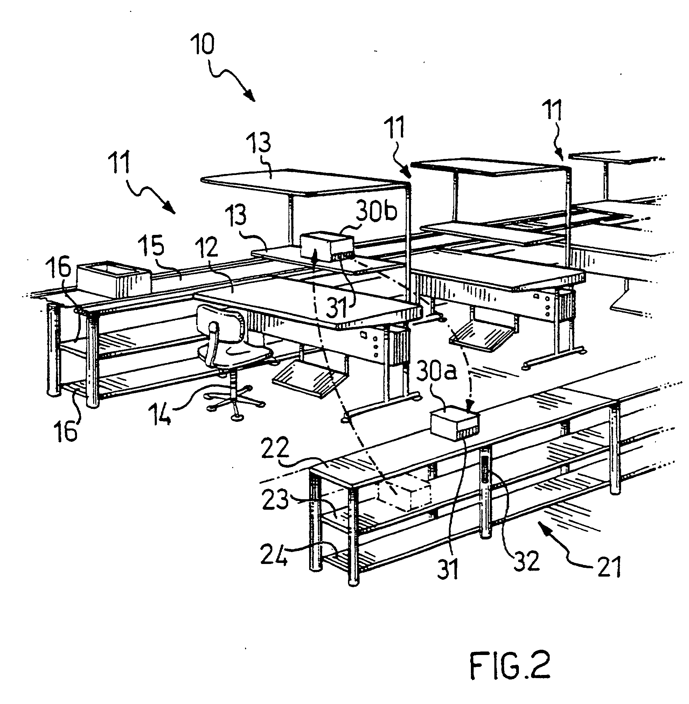

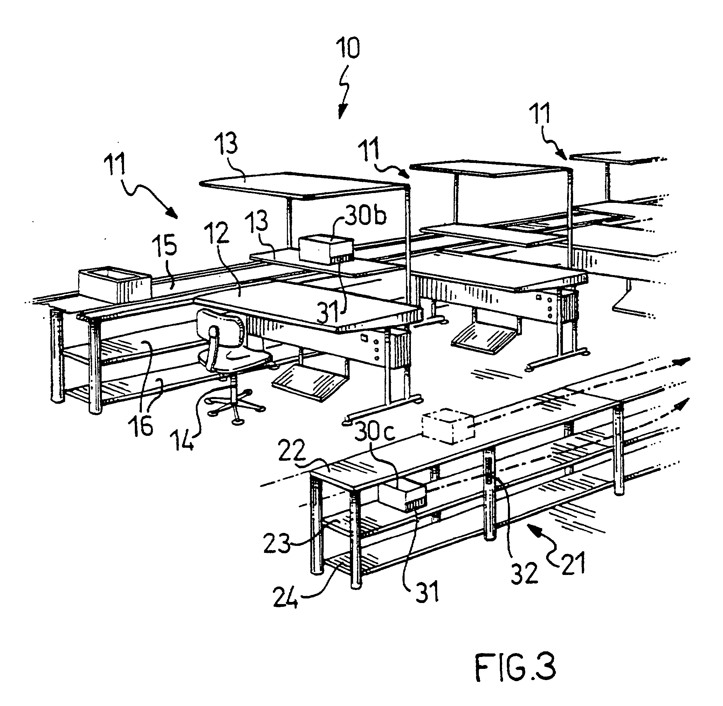

In the FIGS there are also shown some containers 30 for elements (not shown) necessary for production. For a given production run all the containers 30 related to the same type of elements always contain the same number of elements (when full). For greater drawing clarity the situation shown in the FIGS provides that in work position 11 in the foreground there be used a single element (but there could be two or many more) and that its resupply be accomplished by means of only two containers (but there could be three or more). In addition, in FIGS 2 and 3 is also shown in broken lines the position- occupied previously by a container just removed.

In FIG 1 is shown an example of a normal situation during production. A container 30a with the elements necessary for production is in work position 11 (set e.g. on one of the support shelves 13) while another container 30b containing the same type of elements is in service position 21 set on the second shelf 23 (input area). The operator (not shown) performs the operations provided for in work position 11 using the elements contained in container 30a placed on shelf 13 of work position 11 until container 30a is completely empty.

After container 30a has been emptied the operator transfers this empty container 30a from work position 11, on shelf 13; to service position 21 on the first shelf 22 (outlet area) and the full container 30b from service position 21 on the second shelf 23 (input area) to work position 11, on shelf 13. These movements are shown in FIG 2. The operator continues processing using the elements in container 30b.

At the same time container 30a placed in outlet area 22 of service position 21 constitutes by its presence a resupply order for a full container. The resupply order is taken by a service operator (different from the operator of work station 10 and likewise not shown) who attends to securing another full container 30 to replace the empty container 30a.

At the end of the necessary time (resupply time) the service operator places a full container 30c in input area 23 and removes empty container 30a from outlet area 22 of service position 21. These operations are illustrated in FIG 3. Thus the normal situation shown in FIG 1 is restored with the container 30c in place of container 30b in input area 23 of service position 21 and with container 30b in place of container 30a on shelf 13 of work position 11.

Preferably each container 30 is marked with a tag 31 bearing information on the type and, if necessary, on the number of elements contained in container 30 when full. The information on tag 31 is presented in a form readable by a human operator or in a form readable by a machine, e.g. by means of an optical code (bar code, two-dimensional code, color code or the like). Quantity information can be left out if it is expected to change production parameters often so as to require frequent changes in the quantity of -elements in the containers. In this case quantity information for each type of element and each station can be memorized centrally.

Similarly, each work station 10 is marked with a tag 32 placed e.g. on service position 21 and containing identifying information on work station 10. Information on tag 32 is presented in a form readable by a human operator or in a form readable by a machine, e.g. by means of an optical code (bar code, two-dimensional code, color code or the like).

These tags 31 and 32 permit the service operator to read the resupply order rapidly using a portable code reader, memorizing the information on container 30 which is the object of the resupply order and on work station 10 which requires it. The information memorized can then be fed into a control center (not shown) connected to a storeroom (or a supplier) to allow preparation of the full container 30 for resupply.

As an alternative each service position could be equipped with fixed equipment for reading tags 31 on containers 30 and connected in a network with control center so as to send resupply orders directly upon movement of containers 30 into the service position.

## Claims

1. Process for the production of a product starting from a plurality of elements and comprising the steps of:
- use of at least one type of element in a work station (10) with assembly of a semifinished product,
- transfer of the semifinished product to a following work station (10),
- repetition of the above operations in successive work stations (10) until completion of the product, and
**characterized in that** it includes in at least one of the work stations (10) and for each element type which must be used in the work station (10) the following steps:
- supply of the elements to the work station (10) in identical containers (30, 30a, 30b, 30c) always containing the same number of elements,
- provision of a single container (30b) in a work position (11) of the work station and at least one other container (30a, 30c) in a service position (21) of the work station (10) beside the work position (11),
- use of the elements contained in the container (30b) placed in the work position (11) until emptying thereof,
- making of a visual resupply order by moving of the empty container (30a) to an outlet area (22) of the service position (21),
- moving of a full container (30c) into the work position (11), taking it from an input area (23) of the service position (21),
- visual detection of the resupply order, and
- consequent execution of the resupply order by removal of the empty container (30a) from the outlet area (22) of the service position (21) and deposit within a predetermined resupply time of a corresponding full container (30c) in the inlet area (23) of the same service position (21), and in which the number of containers (30a, 30c) in the service position (21), the number of elements in each container (30, 0a, 30b, 30c) and the resupply time are predetermined on the basis of elements consumption in the work station (10) so that in the work station (10), between the work position (11) and the service position (21), there is always present a preset minimum stock of elements.

2. Process in accordance with claim 1 and comprising the steps of:
- marking of each container (30) with a container tag (31) bearing information on the type of elements contained in said container (30) when full.

3. Process in accordance with claim 2 in which the container tag (31) bears information on the quantity of elements contained in said container (30) when full.

4. Process in accordance with claims 2 or 3 in which the container tag (31) is in human readable form.

5. Process in accordance with claim 2 or 3 in which the container tag (31) is in machine readable form.

6. Process in accordance with claim 2 or 3 in which the container tag (31) is in human readable form and in machine readable form.

7. Process in accordance with claim 5 or 6 and including the steps of:
- marking each work station (10) with a station tag (32) bearing machine readable station identifying information.

8. Process in accordance with claim 7 and comprising the steps of:
- reading the container and station tags (31, 32) for each empty container (30a) in the outlet area (22) of a service position (21),
- sending the data read to a control center,
- processing the data in the control center with execution of a resupply order for replacement of the empty containers (30a) with full containers (30c),
- reading of the container and station tags (31, 32) upon each replacement of an empty container (30a) with a full one (30c) in a service position (21),
- sending the data read to the control center, and
- processing the data in the control center so as to verify order execution.

9. Process in accordance with any of the above claims in which the input areas (23) are located in the same position in all the service positions (21) and the outlet areas (22) are located in the same position in all the service positions (21).

10. Process in accordance with claim 9 in which each service position (21) comprises an upper shelf (22) and a lower shelf (23) with the upper shelf constituting the outlet area and the lower shelf constituting the input area.

## Patentansprüche

1. Verfahren zum Herstellen eines Produkts, ausgehend von mehreren Einzelteilen mit folgenden Schritten:
- zumindest ein Einzelteiltyp in einer Arbeitsstation (10) verwendet wird, um ein Halbfertigprodukt zu erstellen,
- das Halbfertigprodukt einer nachfolgenden Arbeitsstation übergeben wird,
- die oben erwähnten Arbeitsvorgänge in aufeinanderfolgenden Arbeitsstationen (10) solange wiederholt werden, bis das Produkt fertiggestellt ist, **dadurch gekennzeichnet, daß** für zumindest eine Arbeitsstation (10) und jeden Einzelteiltyp, der in der Arbeitsstation zu verwenden ist, die folgenden Schritte durchgeführt werden:
- die Arbeitsstation (10) wird mit den Einzelteilen in identischen Behältern (30, 30a, 30b, 30c) beliefert, die immer die gleiche Anzahl von Einzelteilen enthalten,
- ein einzelner Behälter (30b) wird in einer Arbeitsposition (11) der Arbeitsstation und zumindest ein weiterer Behälter (30a, 30c) in einer Serviceposition (21) der Arbeitsstation (10) neben der Arbeitsposition (11) vorgesehen,
- die Einzelteile verbraucht werden, die in dem Behälter (30b) enthalten sind, der bis zu seiner Entleerung in der Arbeitsposition (11) verbleibt,
- ein visueller Neulieferungsbefehl wird dadurch gegeben, daß der leere Behälter (30a) in einen Ausgabebereich (22) der Serviceposition (21) bewegt wird,
- ein voller Behälter (30c) wird in die Arbeitsposition (11) bewegt, indem er aus dem Eingabebereich (23) der Serviceposition (21) entnommen wird,
- der Neulieferungsbefehl wird visuell erfaßt, und
- der Neulieferungsbefehl wird anschließend ausgeführt, indem der leere Behälter (30a) aus dem Ausgabebereich (22) der Serviceposition (21) entfernt wird und ein entsprechender voller Behälter (30c) an dem Eingabebereich (23) der gleichen Serviceposition (21) innerhalb einer vorbestimmten Neulieferungszeit abgelegt wird, wobei die Zahl der Behälter (30a, 30c) in der Serviceposition (21), die Zahl der Einzelteile in jedem Behälter (30, 30a, 30b, 30c) und die Neulieferungszeit auf der Basis eines Einzelteileverbrauchs in der Arbeitsstation (10) vorbestimmt wird, so daß in der Arbeitsstation (10) zwischen der Arbeitsposition (11) und der Serviceposition (21) immer ein vorher bestimmter minimaler Einzelteilvorrat vorliegt.

2. Verfahren nach Anspruch 1, bei dem jeder Behälter (30) mit einem Behälteretikett (31) markiert wird, das eine Information über die Art der Einzelteile trägt, die in dem Behälter (30) im gefüllten Zustand enthalten sind.

3. Verfahren nach Anspruch 2, bei dem das Behälteretikett (31) eine Information über die Menge der in dem Behälter (30) im gefüllten Zustand enthaltenen Einzelteile trägt.

4. Verfahren nach Anspruch 2 oder 3, bei dem das Behälteretikett (31) menschenlesbar ist.

5. Verfahren nach Anspruch 2 oder 3, bei dem das Behälteretikett (31) maschinenlesbar ist.

6. Verfahren nach Anspruch 2 oder 3, bei dem das Behälteretikett (31) sowohl menschenlesbar als auch maschinenlesbar ist.

7. Verfahren nach Anspruch 5 oder 6, bei dem jede Arbeitsstation mit einem Stationsetikett (32) versehen wird, das eine maschinenlesbare, die Station identifizierende Information trägt.

8. Verfahren nach Anspruch 7, bei dem:
- die Behälter- und Stationsetiketten (31, 32) jeden leeren Behälters (30a) in dem Ausgabebereich (22) einer Serviceposition (21) gelesen werden,
- die gelesenen Daten an ein Kontrollzentrum gesendet werden,
- die Daten in dem Kontrollzentrum verarbeitet werden, wobei ein Neulieferungsbefehl zum Ersetzen der leeren Behälter (30a) durch volle Behälter (30c) ausgeführt wird,
- die Behälter- und Stationsetiketten (31, 32) nach jedem Ersetzen eines leeren Behälters (30a) durch einen vollen Behälter (30c) in einer Serviceposition (21) gelesen werden,
- die gelesenen Daten an das Kontrollzentrum gesendet werden, und
- die Daten in dem Kontrollzentrum verarbeitet werden, um eine Befehlsausführung zu verifizieren.

9. Verfahren nach einem der vorangegangenen Ansprüche, bei dem die Eingabebereiche (23) in der gleichen Position in allen Servicepositionen (21) und die Ausgabebereiche (22) in der gleichen Position in allen Servicepositionen (21) angeordnet werden.

10. Verfahren nach Anspruch 9, bei dem jede Serviceposition (21) ein oberes Fach (22) und ein unteres Fach (23) umfaßt, wobei das obere Fach den Ausgabebereich und das untere Fach den Eingabebereich bilden.

## Revendications

1. Procédé de fabrication d'un article à partir de plusieurs éléments et comprenant les étapes de:
- utiliser au moins un type d'élément à un poste de travail (10) avec assemblage d'un article semi-fini,
- transférer le produit semi-fini à un poste de travail suivant(10),
- répéter les opérations précitées à des postes de travail successifs (10) jusqu'à achèvement de l'article, et **caractérisé en ce qu'**il comprend en au moins un des postes de travail (10) et pour chaque type d'élément qui doit être utilisé au poste de travail (10) les étapes suivantes :
- approvisionner les éléments au poste de travail (10) dans des contenants identiques (30, 30a, 30b, 30c) qui contiennent le même nombre d'éléments,
- prévoir un seul contenant (30b) en une position de travail (11) du poste de travail et au moins un autre contenant (30a, 30c) en une position de desserte (21) du poste de travail (10) à côté de la position de travail (11),
- utiliser les éléments contenus dans le contenant (30b) placé à la position de travail (11) jusqu'à l'avoir vidé,
- faire un ordre visuel de réapprovisionnement en déplaçant le contenant vide (30a) vers une zone de sortie (22) de la position de desserte (21),
- acheminer un contenant plein (30c) à la position de travail (11) en le prélevant à une zone d'entrée (23) de la position de desserte (21),
- détecter visuellement l'ordre de réapprovisionnement, et
- exécuter en conséquence l'ordre de réapprovisionnement en enlevant le contenant vide (30a) de la zone de sortie (22) de la position de desserte (21) et en déposant dans un délai de réapprovisionnement prédéterminé un contenant plein correspondant (30c) dans la zone d'entrée (23) de la même position de desserte (21), le nombre de contenants à la position de desserte (21), le nombre d'éléments dans chaque contenant (30a, 30b, 30c) et le délai de réapprovisionnement étant prédéterminés sur la base de la consommation d'éléments au poste de travail (10) de façon qu'il y ait toujours au poste de travail (10), entre la position de travail (11) et la position de desserte (21), la présence d'un stock minimum prédéterminé d'éléments.

2. Procédé selon la revendication 1 et comprenant les étapes de:
- marquer chaque contenant (30) avec une étiquette de contenant (31) portant des informations sur le type d'éléments contenu dans ce contenant (30) lorsqu'il est plein.

3. Procédé selon la revendication 2 dans lequel l'étiquette de contenant (31) porte des informations sur la quantité d'éléments contenus dans ce contenant (30) lorsqu'il est plein.

4. Procédé selon les revendications 2 ou 3, dans lequel l'étiquette de contenant (31) est sous forme lisible par l'homme.

5. Procédé selon la revendication 2 ou 3, dans lequel l'étiquette de contenant (31) est sous forme lisible par machine.

6. Procédé selon la revendication 2 ou 3, dans lequel l'étiquette de contenant (31) est sous forme lisible par l'homme et sous forme lisible par machine.

7. Procédé selon la revendication 5 ou b et comprenant les étapes de :
- marquer chaque poste de travail (10) avec une étiquette de poste (32) portant des informations d'identification de poste lisibles par machine.

8. Procédé selon la revendication 7 et comprenant les étapes de :
- lire les étiquettes de contenant et de poste (31, 32) pour chaque contenant vide (30a) dans la zone de sortie (22) d'une position de desserte (21),
- envoyer les données à un centre de commande,
- traiter les données au centre de commande avec exécution d'un ordre de réapprovisionnement pour remplacer les contenants vides (30a) par des contenants pleins (30c),
- lire les étiquettes de contenant et de poste (31, 32) à chaque remplacement d'un contenant vide (30a) par un plein (30c) dans une position de desserte (21),
- envoyer les données lues au centre de commande, et
- traiter les données au centre de commande de façon à vérifier l'exécution de l'ordre.

9. Procédé selon l'une quelconque des revendications précédentes, dans lequel les zones d'entrée (23) sont situées dans la même position dans toutes les positions de desserte (21) et les zones de sortie (22) sont situées dans la même position dans toutes les positions de desserte (21).

10. Procédé selon la revendication 9, dans lequel chaque position de desserte (21) comprend une étagère supérieure (22) et une étagère inférieure (23), l'étagère supérieure constituant la zone de sortie et l'étagère inférieure constituant la zone d'entrée.
